# EUROPEAN PATENT SPECIFICATION

(11) **EP 1 456 965 B1**
(45) Date of publication and mention of the grant of the patent: **20.09.2006**
(21) Application number: 02785843.0
(22) Date of filing: 05.12.2002
(51) Int. Cl.: H04B 7/005, H04B 17/00, H04B 7/04, H04L 1/00

(54) **PARAMETER ESTIMATION FOR ADAPTIVE ANTENNA SYSTEM**
PARAMETERSCHÄTZUNG FÜR ADAPTIVES ANTENNENSYSTEM
ESTIMATION DE PARAMETRES POUR SYSTEME D'ANTENNE ADAPTATIVE

(30) Priority: 21.12.2001 GB 0130687
(43) Date of publication of application: 15.09.2004
(73) Proprietor: Nokia Corporation, 02150 Espoo (FI)
(72) Inventor: TIIROLA, Esa, FIN-90630 Oulu (FI); YLITALO, Juha, FIN-90540 Oulu (FI)
(74) Representative: Williams, David John
(86) International application number: PCT/IB2002/005161
(87) International publication number: WO 2003/055099

(56) References cited:
- EP-A- 0 952 682
- WO-A-00/51389
- WO-A-01/08369
- US-A- 6 108 565

## Description

### Field of the Invention

The present invention relates to a technique for estimating parameters in the receiver of an adaptive antenna system, and particularly but not exclusively to channel quality estimation in the receiver of a mobile station or user equipment in a mobile communication system.

### Background to the Invention

One of the near future targets of the UTRA/FDD-system is to support data rates significantly beyond 2 Mbps. This is known as high speed downlink packet access (HSDPA), and the standardisation of this feature is expected to be finalised during 2002. HSDPA uses a special high speed downlink shared channel (HS-DSCH) which is similar to the Release'99 downlink shared channel (DSCH), but without fast power control. The data throughput can be increased by using higher order modulation and less redundant turbo coding if the channel condition is favorable. The basic principle is simple. The UE (user equipment) measures the DL (down link) channel quality, maps it to an internal mapping table, and informs the BS (base station) using the UL (up link) feedback channel as to which is the highest modulation scheme that is applicable.

In the general case (i.e. not in the case of HSDPA) the transmission scheme (and data rate) which is adapted according to the feedback information can be also, e.g., the coding scheme, the spreading scheme, the interleaving scheme and the rate matching scheme (i.e., not only the modulation scheme).

Different beamforming techniques are also targeting to increase the network capacity (and support higher data rates) in cellular systems. A major benefit of using directive beamforming in the DL (down link) is a significant decrease in the transmitting powers (due to the additional antenna gain). Due to that, the capacity of the network can be expected to be increased significantly. It is an aim of the present invention to provide a mechanism for the DL channel quality measurement needed in HSDPA, in the context of user specific beamforming.

In the forward link, i.e. the down-link, of a wide-band code division multiple access (WCDMA) system, a primary common pilot channel (P-CPICH) is broadcast over the entire cell of a sector. The P-CPICH is broadcast also in the case of a multi-beam arrangement (multiple beams per sector) and in user specific beam-forming. Therefore there always exists one such channel per sector regardless of the applied transmission scheme.

In systems utilising adaptive antenna techniques, dedicated channels (and high speed downlink shared channels - HS-DSCH) are usually transmitted through a narrow beam, which means that the P-CPICH is likely to experience different channel characteristics on transmission to a mobile station or user equipment antenna than the down-link dedicated physical channels (DL-DPCH) and the HS-DSCH.

It has been proposed, in one current known system, for the down-link dedicated physical control channel (DL-DPCCH) to be used as a measurement channel in a HSDPA scheme (i.e., when estimating the channel condition) in the context of user specific beamforming, because of the fact that the P-CPICH does not experience the same channel characteristics as HS-DSCH and DL-DPCH. However, it is very difficult to estimate the channel condition from the DL-DPCCH since the channel is power controlled.

It is therefore an aim of the present invention to provide an improved technique for estimating the channel quality related parameters in the receiver of an adaptive antenna system. It is particularly an aim of the present invention to provide an improved technique suitable for use in difficult, or "bad-urban" environments.

"Bad urban" refers to the radio environment having a mixture of open areas and densely built up zones with a large variety of different building heights. The wide angular spread in "bad urban" -environment can be represented as two (relatively widely spaced) clusters in the angular domain.

EP 0 952 682 discusses a system and method for transmitting and receiving digital information over mobile communication systems with an enhanced channel estimator which iteratively estimates channel amplitude and phase distortion from received pilot and data signal information.

U.S. 6,108,565 describes a way to enhance signal quality in both up and downlink of a wireless point to multi-point CDMA service.

### Summary of the Invention

According to the present invention there is provided a method of determining the channel quality of a transmitted signal in a receiver of a communication system, said system having an adaptive antenna transmitter capable of transmitting at least one narrow beam signal and at least one wide antenna signal, said method comprising: receiving said beam signal; receiving said antenna signal; wherein the received beam and antenna signals each comprise a plurality of multi-path signals; and estimating parameters of the received beam signal based on the information received in a first sub-set of the multi-paths of the received antenna signal; characterised in that the first sub-set of the multi-paths of the received antenna signal corresponding to the multi-paths detected in the received beam signal is selected

The receiver may determine a transmission scheme for the transmitter in dependence on the determined channel quality.

The receiver may determine a transmission scheme for a HSDPA transmission in dependence on the determined channel quality. The transmission scheme may include variable modulation schemes. The transmission scheme may include variable spreading schemes. The transmission scheme may include variable coding schemes. The transmission scheme may include variable interleaving schemes. The transmission scheme may include variable rate matching schemes.

The receiver may determine a feedback transmission scheme from the receiver to the transmitter in dependence on the determined channel quality.

A base station may determine the first sub-set of the multi-paths and the determined information may be signalled to the user equipment.

The transmitter may employ analog beamforming. The transmitter may employ digital beamforming. The transmitter may employ fixed beams.

The first sub-set of the multi-paths of the received antenna signal may correspond to those multi-paths received first.

The receiver may be a mobile terminal of a mobile communication system.

According to a further aspect of the invention there is provided a receiver of a communication system, said system having an adaptive antenna transmitter capable of transmitting at least one narrow beam signal and at least one wide antenna signal, said receiver comprising: input means for receiving a beam signal and for receiving an antenna signal, wherein the received beam and antenna signals each comprise a plurality of multi-path signals; estimating means, connected to the input means, for estimating the channel quality of the received beam signal based on information received in a first sub-set of the multi-paths of the received antenna signals; wherein the first sub-set of the multi-paths of the received antenna signal correspond to the multi-paths detected in the received beam signal.

The receiver may determine a transmission scheme for the transmitter in dependence on the determined channel quality. The receiver may determine a transmission scheme for a HSDPA transmission in dependence on the determined channel quality.

The transmission scheme may include variable modulation schemes. The transmission scheme may includes variable spreading schemes. The transmission scheme may include variable coding schemes. The transmission scheme may include variable interleaving schemes. The transmission scheme may include variable rate matching schemes.

The receiver may determine a feedback transmission scheme from the receiver to the transmitter in dependence on the determined channel quality.

A base station may determine the first sub-set of the multi-paths and the determined information is signalled to the user equipment.

The transmitter may employ analog beamforming. The transmitter may employ digital beamforming. The transmitter may employ fixed beams.

The receiver may further comprise means for transmitting any determined modulation scheme.

The first sub-set of the multi-paths of the received antenna signal may correspond to those multi-paths received first.

### Brief Description of the Figures

The invention will be best understood by way of example with reference to the following Figures in which:
Figure 1 illustrates exemplary W-CDMA base station cells utilising different transmission schemes in each cell (three-sectorised configuration);
Figure 2 illustrates in block diagram form elements of an exemplary channel state estimator within which the present invention may be implemented; and
Figure 3 illustrates in block diagram form the introduction of the exemplary channel state estimator of Figure 2 in an exemplary receiver.

### Description of the Preferred Embodiment

In the following, the invented method is described in context of a 3^{rd} generation radio access method, namely Wide-band Code Division Multiple Access (WCDMA). However, the proposed method is not restricted to UMTS but, it can be applied to any wireless communication system.

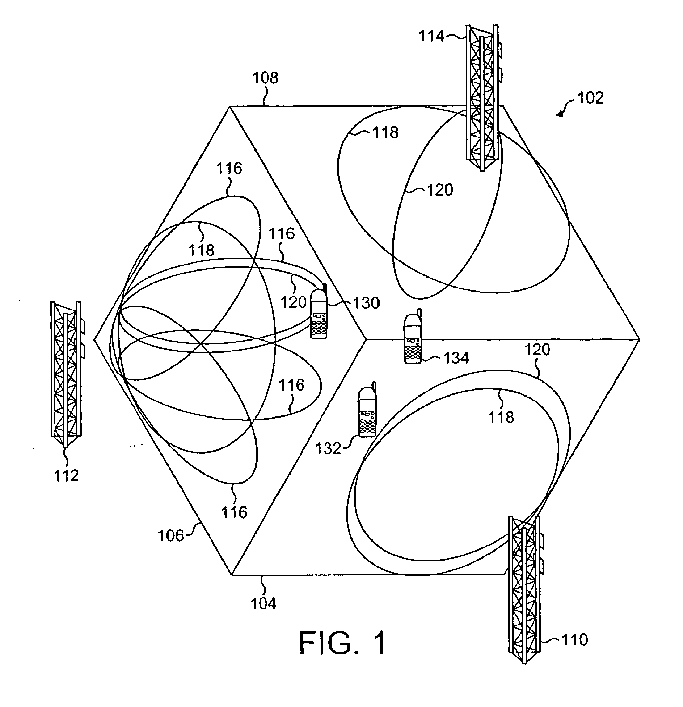

With reference to Figure 1, there are now described examples of multi-sector W-CDMA cells with respect to which the invention is illustrated. The invention is not, however, in any way limited to such a specific example.

A plurality of mobile stations, or user equipment, roam within the cell. For example, as shown in Figure 1, mobile station 130 is connected in sector 106, mobile station 132 is connected in sector 104, and mobile station 134 is connected in sectors 104 and 108.

The base station cell 102 is divided into *N* sectors, where *N*= 3 in the example of Figure 1.

As exemplified by sectors 106 and 108 of Figure 1, each sector can be divided into either *K* fixed beams (106) or steerable (user specific) beams (108) using base transceiver stations 112 and 114, respectively. The beams 116 represent the secondary common pilot channel, the beam 120 the down-link dedicated physical channel (or HS-DSCH), and the beam 118 the primary common pilot channel.

Sector 104 of Figure 1 illustrates the traditional single antenna transmission scheme utilizing a base transceiver station 110. The beam 120 is the down-link dedicated physical channel (or HS-DSCH), and the beam 118 is the primary common pilot channel.

Sector 108 of Figure 1 illustrates user specific beam-forming using a base transceiver station 114. The beam 120 is the down-link dedicated physical channel (or HS-DSCH), and the beam 118 is the primary common pilot channel.

Figure 1 thus illustrates the CPICHs needed in the different transmission schemes, and the DL-DPCH (or HS-DSCH) of a single user.

For the purposes of describing the present invention, two of the three base transceiver stations of the example of Figure 1 use adaptive antenna techniques for communicating with mobile stations in the various sectors of the cell. The two cells utilizing adaptive antenna techniques are cells 106 and 108. Adaptive antenna techniques are well-known in the art, and the present invention is not directly concerned with any specific implementation details of such techniques. As a skilled person will be familiar with, when using adaptive antenna techniques the base transceiver station 100 transmits mobile specific data to a mobile station through a narrow beam.

The W-CDMA specification defines three different types of pilot channels in the forward link for an adaptive antenna system. These pilot channels are:
1. P-CPICH (Primary Common Pilot Channel);
2. S-CPICH (Secondary Common Pilot Channel); and
3. Dedicated pilot symbols in DPCCH (Dedicated Physical Control Channel).

The P-CPICH is broadcast over an entire sector in a multi-sector arrangement, and there exists only one such channel for each sector. The P-CPICH is used in the hand-over measurements and cell selection/reselection procedures. Another function of the P-CPICH channel, when the common channels are not associated with dedicated channels or not involved in adaptive antenna techniques, is to aid the channel estimation at the mobile station for the dedicated channels, and to provide a channel estimation reference for the common channels.

The S-CPICH may be transmitted over the entire cell or over only part of the cell. There may be zero, one or several S-CPICHs per cell or sector. One typical area of S-CPICH usage is operations with base stations having multiple (fixed) beams per sector. The S-CPICHs are used for identifying different beams at the mobile station.

The dedicated pilot symbols are multiplexed into the down-link dedicated physical channel (DPCH). They are used in signal-to-interference ratio (SIR) estimation and may also be used in the channel estimation. If the mobile station or user equipment is informed that the P-CPICH is not the phase reference and there is no S-CPICH available, then the dedicated pilot bits in the DL-DPCCH are the phase reference for the DL-DPCH (and HS-DSCH). This may happen, for example, in the case of user-specific beam forming.

It should be noted that in the following description reference is made to a beam signal and an antenna signal. For the purposes of this patent application, the term antenna signal refers to a wide beam signal by which a broadcast signal, and in particular embodiments the common control channels, are transmitted. The term beam signal refers to a narrow beam signal by which a dedicated channel signal (or signal of HS-DSCH), and in particular embodiments dedicated control channels, are transmitted. In a specific embodiment, the broadcast common control channel is the P-CPICH, and the dedicated control channel is the DPCCH.

Even though user specific beam forming is applied in adaptive antenna systems, the P-CPICH must be broadcast. This means that there is a strong-powered pilot channel that is available to all mobile stations. In many cases, the SNR of the continuous and non-power-controlled P-CPICH is much better than that of time-multiplexed and power-controlled DL-DPCCH. The relative difference of SNRs (P-CPICH vs. DL-DPCH) gets biggest when the mobile station is situated near to the base station.

The present invention therefore proposes to use the primary common pilot channel P-CPICH for estimating parameters related to the channel quality in a mobile station or user equipment of the adaptive antenna system, as will be described further hereinafter with reference to exemplary embodiments.

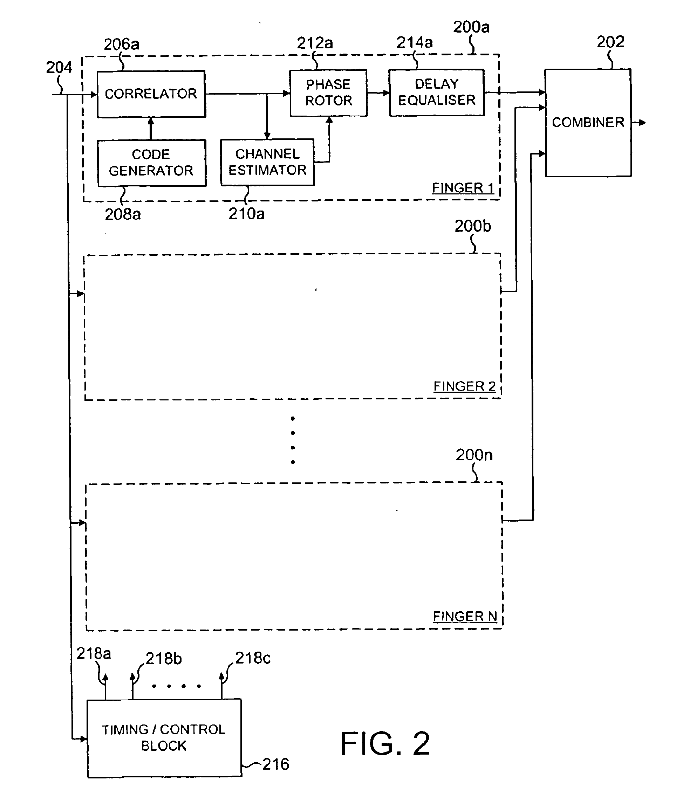

Referring to Figure 2, there is illustrated a block diagram of an exemplary W-CDMA rake receiver, with respect to which preferred embodiments of the present invention will be described.

Figure 2 shows an exemplary receiver for receiving signals that are comprised of multi-paths. In such scenarios it is known to provide a plurality of receiver 'fingers' which can each process a respective multi-path. In practice the receiver may be controlled such that a single finger is provided but controlled, in time, such that it operates as several fingers. For the purposes of the present example, it is assumed that the receiver is provided with multiple fingers for processing the multi-paths of the received signal.

The received signal on line 204, which carries received symbols, is provided as an input to each of the plurality of fingers 200 of the receiver.

The receiver comprises a plurality of fingers 200a to 200n. The number of fingers is implementation dependent. Each finger is constructed identically, and only the main elements of finger 200a are shown. Finger 200a receives the received signal on line 204, which is initially processed by a correlator block 206a. The correlator block 206a receives a code from the code generator 208a in order to perform the correlation of the received signal. The output of the correlator block provides an input to a channel estimator block 210a and a phase rotator block 212a. The phase rotator block 212a also receives an input from the channel estimator 210a, and removes the channel estimate from the received signal. A delay equalizer 214a compensates for the different time of arrival of the received symbol in each finger. The combiner 202 then combines the results from each finger to provide a received symbol for further processing in the receiver.

Each finger 200 therefore acts to despread a received multi-path.

A timing/control block 216 controls the timing of the fingers. Specifically, the timing/control block receives the received symbols on line 204, and using known techniques determines the positions of the multi-paths in the received signal, and thereby provides timing information on lines 218a to 218n to the respective fingers to enable each finger to process a multi-path.

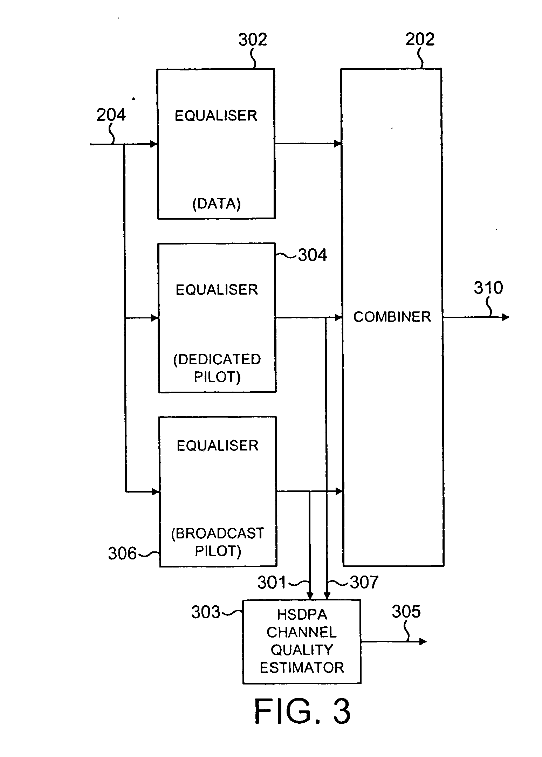

Referring further now to Figure 3, there is illustrated a block diagram of those elements of a receiver suitable for implementing the present invention in an exemplary W-CDMA system and necessary for an understanding of the present invention. Referring to Figure 3, there is provided three equaliser blocks 302, 304 and 306. There is further provided a channel decoding block 308.

The equaliser block 302 acts as an input means to the receiver for normal data transmission (including HS-DSCH). The equaliser block 304 acts as an input means to the receiver for the dedicated pilot channels in the beam signal. The equaliser block 306 acts as an input means to the receiver for the broadcast channels in the antenna signal.

The three equaliser blocks perform the equalisation for the respective signals, all of which are received at the receiver antenna as generally indicated by line 204.

Each of the outputs of the equalisers 302, 304, and 306 produces a respective output on which form inputs to the combiner 202. The combiner 202 is the same as in Figure 2, but is adapted to receive input signals from all three of the equalizers 302 to 306, whereas Figure 2 shows signals from only one equalizer. The signals on the outputs of the equalizers 302, 304, 306 are finger specific pilot/data symbols. The combined finger signals from the one of the equalizers 302 to 306 currently in operation is then provided on line 310 for further processing.

Each of the equalizer blocks may be constructed as shown in Figure 3. Once again, however, a single equalizer block may be time multiplexed. Each of the equaliser's 302, 304 and 306 provide on their respective outputs despread signals. The combiner block 202 combines the despread received multipath signals in accordance with standard techniques.

It should be noted that although Figure 3 shows that a separate equalizer block is provided for each type of signal, in practice a single time-multiplexed equalizer block may be provided and used for all types of signals. Therefore the example implementation shown in Figure 3 is for the purposes of describing the present invention only, and the invention is not limited to such a specific example.

As described hereinabove, the HSDPA scheme requires a separate block to estimate the condition of the channel. A shown in Figure 3, a HSDPA channel quality estimator 303 receives the despread broadcast pilot channel and despread dedicated pilot channel. Thus the block 303 receives the despread pilot/data of different rake fingers of the beam signal on line 307, and the despread pilot/data of different rake fingers of the antenna signal on line 301. Estimated channel condition information on line 305 is generated by mapping to an internal mapping table and informed to the base station (BS) by using the up link (UL) feedback channel.

It should also be noted that the arrangement of Figure 2 is for purposes of describing the invention, and the invention is not limited to such an example. In other implementations a single, time-multiplexed finger may be provided. In other implementations some elements of the finger may be shared and time-multiplexed. In one possible implementation a plurality off correlators may be provided, and all other elements of the fingers 200 provided in a time-multiplexed manner. In practice, the plurality of correlators may be implemented as a single correlator with multiple taps, each tap corresponding to a time delay.

In order to implement the present invention, in one embodiment it is proposed that the timing/control block 216 of Figure 2 be adapted, as will be described further hereinafter. The adaptation of the timing/control block 216 will be dependent upon the specific implementation of the invention.

As will be discussed further hereinafter, however, in HSDPA applications the timing/control block 216 may be unchanged, and the necessary adaptations may be made in the HSDPA channel quality estimator 303.

As stated above, for a given implementation the receiver operates with a certain number of fingers or taps. In accordance with the present invention, it is proposed that the characteristics of the transmitted beam signal are determined based on the information received in the received antenna signal, but that only selected multi-paths of the received antenna signal are used. That is, only selected fingers or taps of those available are used in analyzing the received antenna signal.

The smallest delay in the delay profile of the received multi-paths closely corresponds to the distance (and azimuth direction) of a UE from the base station. The multipath corresponding to the smallest delay can therefore be regarded as the most reliable signal component from the UE. In addition, the larger the angular spread, the larger is usually the delay spread. The first embodiment of the present invention utilizes these characteristics to provide an improved technique for determining the channel characteristics of a received signal.

In accordance with this first embodiment of the present invention, it is proposed to use a subset of the multi-paths associated with the antenna signal, and more particularly that subset which corresponds to the multi-paths having the shortest delays. Thus in this embodiment, the fingers or taps associated with the multi-paths having the shortest delays are used in the downlink quality measurement, and those fingers or taps associated with larger delays are ignored.

In practice, this means that the only the first cluster with shorter distances to the base station is used for the channel quality measurements, and the second cluster is dropped away.

Thus the delay taps or fingers of the second cluster are seen only at the side lobe level in the beam signal and they are not utilized.

This technique according to the first embodiment improves the channel quality measurement significantly, particularly in conditions where there are many multi-paths. A particular environment where the invention is advantageous is the "bad-urban" radio environment.

Thus in this embodiment of the invention, the timing/control block 216 is adapted to control the fingers 200a to 200n such that only fingers associated with the first subset of multi-paths are utilized in the channel quality measurement and the outputs of such combined in the combiner 202. As such, the timing/control block is adapted to identify the first cluster of multi-paths, and control the timing of the fingers 200 accordingly.

Two possible approaches for implementing this embodiment of the present invention are set out hereafter.

In a first implementation, the timing/control block is controlled such that the UE may use a maximum fixed number of rake fingers in the channel quality estimator in dependence on the spread of the first cluster of multi-paths. Thus, for example, a maximum of 4 fingers may be used if the first set of multi-paths are within 1.0 microsecond of each other; or a maximum of 6 fingers may be used if the first set of multi-paths are within 1.5 microseconds of each other.

This implementation is particularly advantageous in that it does not increase the UE complexity. The timing/control block merely needs to be able to identify the first cluster (which a conventional timing/control block is capable of doing) and then selecting the number of rake fingers in accordance with such a predetermined relationship between the spread of multi-paths and number of fingers.

In a second proposed implementation of the first embodiment, the base station instructs the UE as to how many rake fingers should be applied.

The base station has knowledge of the angular and delay spreads in the radio channel. Since, in terms of average power, the downlink and uplink channels are reciprocal, the taps (or fingers) with strong correlation between the beam signal and the antenna signal can be evaluated at the base station. Then, the number of best taps and their delays for high speed downlink packet access (HSDPA) transmission can be informed to the UE. This approach requires additional signaling between the base station and the UE but does not, in practice, increase the UE complexity. The taps or fingers to be used are merely informed to the timing/control block of the UE.

In a HSDPA application, an embodiment may be provided in which all the rake fingers operate as normally to de-spread the received multi-paths, with no special control applied to select certain multi-paths. The various multi-paths may be provided to the HSDPA channel quality estimator 303, and the selection of multi-paths is applied therein rather than in timing/control block 216 in Figure 2. As such, the modifications required to existing systems is minimized, only the HSDPA channel quality estimator being adapted.

In accordance with a second embodiment of the present invention, it is also proposed to use a subset of the multi-paths associated with the antenna signal, but more particularly that subset which corresponds to the multi-paths detected in the beam signal. Thus in this embodiment, the fingers or taps associated with the multi-paths in the beam signal are used in the downlink quality measurement using the antenna signal.

In the case of user-specific beam-forming, the dedicated pilot symbols are transmitted through the beam to the UE. The UE can then estimate the relevant delays in the multi-paths of the received signal from those pilot signals.

Using that information, the UE can then select those taps from the beam signal, for use in the P-CPICH assisted channel quality evaluation. The timing location information of the multi-paths obtained by the timing/control block associated with the equalizer 304 is provided to the timing/control block associated with the equalizer 306. This timing information is then used to select the multi-paths for the antenna signal. Thus the downlink channel quality estimation using the antenna signal uses the delays that correspond to the delays estimated from the dedicated pilot symbols, and is not based on multi-path estimation for the antenna signal itself.

This ensures that the channel quality estimated from the selected P-CPICH taps corresponds to the channel quality of the beam signal.

This approach increases the UE complexity compared to the scenario in which the downlink channel is simply estimated only from the P-CPICH. However as described hereinabove, improved results are obtained over those for the standard case.

In this second embodiment, as discussed hereinabove with reference to the first embodiment, the HSDPA may be adapted to implement the invention. As such, all multi-paths are provided to the HSDPA channel quality estimator 303, and the selection of the multi-paths then carried out.

In either of the above-described embodiments, and as further described in detail hereinbelow, the primary common pilot channel is preferably used in combination with the existing channels for estimating parameters. Particularly advantageously, the primary common pilot channel is used in channel quality estimation in the mobile station.

There is a significant fading correlation between the beam signal and the antenna signal in the case of user specific beam forming. The narrower the angular spread (seen from the base transceiver station) the more correlated is the fading of the two signals. The correlation property can be exploited by using both P-CPICH and DL-DPCCH in the channel quality estimation of DL-DPCH and HS-DSCH.

In a macro-cellular radio environment it is assumed that: the angular spread is typically relatively low; there are multiple channel taps; multiple channel taps (each tap is a separate cluster in the angular domain); LOS (strong correlation, narrow angular spread); and the speed of mobile can be high.

The present invention thus provides a technique in which the correlation between the beam signal (DL-DPCH and HS-DSCH) and the antenna signal (P-CPICH) in the parameter estimation (especially channel quality estimation) is used.

The invention may be particularly advantageously applied in a system utilising high speed downlink packet access (HSDPA) techniques).

It will be appreciated by one skilled in the art that although the invention has been described with reference to particular examples, the invention is not limited in its applicability to such examples. The scope of the invention is defined by the appended claims.

## Claims

1. A method of determining the channel quality of a transmitted signal in a receiver (112, 114) of a communication system, said system having an adaptive antenna transmitter capable of transmitting at least one narrow beam signal (116, 120) and at least one wide antenna signal (118), said method comprising: receiving said beam signal; receiving said antenna signal; wherein the received beam and antenna signals each comprise a plurality of multi-path signals; and estimating parameters of the received beam signal based on the information received in a first sub-set of the multi-paths of the received antenna signal; **characterised in that** the first sub-set of the multi-paths of the received antenna signal corresponding to the multi-paths in the received beam signal is selected.

2. A method according to claim 1, wherein the receiver determines a transmission scheme for the transmitter in dependence on the determined channel quality.

3. A method according to claim 1 or claim 2, wherein the receiver determines a transmission scheme for a high speed downlink packet access transmission in dependence on the determined channel quality.

4. A method according to any one of claims 2 to 3 wherein the transmission scheme includes variable modulation schemes.

5. A method according to any one of claims 2 to 3 wherein the transmission scheme includes variable spreading schemes.

6. A method according to any one of claims 2 to 3 wherein the transmission scheme includes variable coding schemes.

7. A method according to any one of claims 2 to 3 wherein the transmission scheme includes variable interleaving schemes.

8. A method according to any one of claims 2 to 3 wherein the transmission scheme includes variable rate matching schemes.

9. A method according to any preceding claim, wherein the receiver determines a feedback transmission scheme from the receiver to the transmitter in dependence on the determined channel quality.

10. A method according to any preceding claim, wherein a base station determines the first sub-set of the multi-paths and the user equipment is informed of the determined first sub-set of multi-paths.

11. A method according to any one of claims 1 to 10 wherein the transmitter employs analog beamforming.

12. A method according to any one of claims 1 to 10 wherein the transmitter employs digital beamforming.

13. A method according to any one of claims 1 to 10 wherein the transmitter employs fixed beams.

14. A method according to any preceding claim wherein the first sub-set of the multi-paths of the received antenna signal corresponds to those multi-paths received first.

15. A method according to any preceding claim wherein the receiver is a mobile terminal of a mobile communication system.

16. A receiver (112, 114) of a communication system, said system having an adaptive antenna transmitter capable of transmitting at least one narrow beam signal (116, 120) and at least one wide antenna signal (118), said receiver comprising: input means for receiving a beam signal (116, 120) and for receiving an antenna signal (118), wherein the received beam and antenna signals each comprise a plurality of multi-path signals; estimating means (303), connected to the input means, for estimating the channel quality of the received beam signal based on information received in a first sub-set of the multi-paths of the received antenna signals wherein the first sub-set of the multi-paths of the received antenna signal correspond to the multi-paths in the received beam signal.

17. A receiver according to claim 16, wherein the receiver determines a transmission scheme for the transmitter in dependence on the determined channel quality.

18. A receiver according to claim 16 or claim 17, wherein the receiver determines a transmission scheme for a high speed downlink packet access transmission in dependence on the determined channel quality.

19. A receiver according to any one of claims 17 to 18, wherein the transmission scheme includes variable modulation schemes.

20. A receiver according to any one of claims 17 to 18, wherein the transmission scheme includes variable spreading schemes.

21. A receiver according to any one of claims 17 to 18, wherein the transmission scheme includes variable coding schemes.

22. A receiver according to any one of claims 17 to 18, wherein the transmission scheme includes variable interleaving schemes.

23. A receiver according to any one of claims 17 to 18, wherein the transmission scheme includes variable rate matching schemes.

24. A receiver according to any one of claims 16 to 23, wherein the receiver determines a feedback transmission scheme from the receiver to the transmitter in dependence on the determined channel quality.

25. A receiver according to any one of claims 16 to 24, wherein a base station determines the first sub-set of the multi-paths and the user equipment is informed of the determined first sub-set of multi-paths.

26. A receiver according to any one of claims 16 to 25, wherein the transmitter employs analog beamforming.

27. A receiver according to any one of claims 16 to 25, wherein the transmitter employs digital beamforming.

28. A receiver according to any one of claims 16 to 25, wherein the transmitter employs fixed beams.

29. A receiver according to any one of claims 16 to 27, wherein the receiver further comprises means for transmitting a determined modulation scheme.

30. A receiver according to any one of claims 16 to 29, wherein the first sub-set of the multi-paths of the received antenna signal corresponds to those multi-paths received first.

31. A receiver according to any one of claims 16 to 30, wherein the receiver is a mobile terminal of a mobile communication system.

## Patentansprüche

1. Verfahren zum Bestimmen der Kanalqualität eines übertragenen Signals in einem Empfänger (112, 114) eines Kommunikationssystems, wobei das System einen Sender mit adaptiver Antenne aufweist, der in der Lage ist, mindestens ein Richtstrahl-Signal (116, 120) und mindestens ein breites Antennensignal (118) zu senden, wobei das Verfahren umfasst:
Empfangen des Strahlsignals;
Empfangen des Antennensignals;
wobei das empfangene Strahl- und Antennensignal jeweils eine Vielzahl von Mehrwege-Ausbreitungs-Signalen umfassen; und
Abschätzen von Parametern des empfangenen Strahlsignals auf der Grundlage der Informationen, die in einer ersten Untermenge der Mehrwege-Ausbreitungen des empfangenen Antennensignals empfangen wurden; **dadurch gekennzeichnet, dass**
die erste Untermenge der Mehrwege-Ausbreitungen des empfangenen Antennensignals entsprechend den Mehrwege-Ausbreitungen in dem empfangenen Strahlsignal gewählt wird.

2. Verfahren nach Anspruch 1, wobei der Empfänger ein Übertragungsschema für den Sender in Abhängigkeit von der bestimmten Kanalqualität bestimmt.

3. Verfahren nach Anspruch 1 oder 2, wobei der Empfänger ein Übertragungsschema für eine Hochgeschwindigkeits-Downlink-Paket-Zugangs-Übertragung in Abhängigkeit von der bestimmten Kanalqualität bestimmt.

4. Verfahren nach einem der Ansprüche 2 oder 3, wobei das Übertragungsschema variable Modulationsschemata einschließt.

5. Verfahren nach einem der Ansprüche 2 oder 3, wobei das Übertragungsschema variable Spreizschemata einschließt.

6. Verfahren nach Anspruch 2 oder 3, wobei das Übertragungsschema variable Kodierungsschemata einschließt.

7. Verfahren nach Anspruch 2 oder 3, wobei das Übertragungsschema variable Verschränkungsschemata einschließt.

8. Verfahren nach Anspruch 2 oder 3, wobei das Übertragungsschema variable Ratenanpassungsschemata einschließt.

9. Verfahren nach einem der vorhergehenden Ansprüche, wobei der Empfänger ein Rückkopplungs-Übertragungsschema von dem Empfänger zu dem Sender in Abhängigkeit von der bestimmten Kanalqualität bestimmt.

10. Verfahren nach einem der vorhergehenden Ansprüche, wobei eine Basisstation die erste Untermenge der Mehrwege-Ausbreitungen bestimmt und die Benutzerausrüstung über die bestimmten erste Untermenge von Mehrwege-Ausbreitungen informiert wird.

11. Verfahren nach einem der Ansprüche 1 bis 10, wobei der Sender analoge Strahlformung einsetzt.

12. Verfahren nach einem der Ansprüche 1 bis 10, wobei der Sender digitale Strahlformung einsetzt.

13. Verfahren nach einem der Ansprüche 1 bis 10, wobei der Sender feste Strahlen einsetzt.

14. Verfahren nach einem der vorhergehenden Ansprüche, wobei die erste Untermenge der Mehrwege-Ausbreitungen des empfangenen Antennensignals den zuerst empfangenen Mehrwege-Ausbreitungen entspricht.

15. Verfahren nach einem der vorhergehenden Ansprüche, wobei der Empfänger ein Mobilendgerät eines Mobilkommunikationssystems ist.

16. Empfänger (112, 114) eines Kommunikationssystems, wobei das System einen Sender mit adaptiver Antenne aufweist, der in der Lage ist, mindestens ein Richtstrahl-Signal (116, 120) und mindestens ein breites Antennensignal (118) zu senden, wobei der Empfänger umfasst:
Eingangsmittel zum Empfangen eines Strahlsignals (116, 120) und zum Empfangen eines Antennensignals (118), wobei die empfangenen Strahl- und Antennensignale jeweils eine Vielzahl von Mehrwege-Ausbreitungs-Signalen umfassen;
Schätzmittel (303), verbunden mit den Eingangsmitteln, zum Abschätzen der Kanalqualität des empfangenen Strahlsignals auf der Grundlage von Informationen, die in einer ersten Untermenge der Mehrwege-Ausbreitungen der empfangenen Antennensignale empfangen wurden; wobei die erste Untermenge der Mehrwege-Ausbreitungen des empfangenen Antennensignals den Mehrwege-Ausbreitungen in dem empfangenen Strahlsignal entspricht.

17. Empfänger nach Anspruch 16, wobei der Empfänger ein Übertragungsschema für den Sender in Abhängigkeit von der bestimmten Kanalqualität bestimmt.

18. Empfänger nach Anspruch 16 oder 17, wobei der Empfänger ein Übertragungsschema für eine Hochgeschwindigkeits-Downlink-Paket-Zugangs-Übertragung in Abhängigkeit von der bestimmten Kanalqualität bestimmt.

19. Empfänger nach einem der Ansprüche 17 oder 18, wobei das Übertragungsschema variable Modulationsschemata einschließt.

20. Empfänger nach einem der Ansprüche 17 oder 18, wobei das Übertragungsschema variable Spreizschemata einschließt.

21. Empfänger nach einem der Ansprüche 17 oder 18, wobei das Übertragungsschema variable Kodierungsschemata einschließt.

22. Empfänger nach einem der Ansprüche 17 oder 18, wobei das Übertragungsschema variable Verschränkungsschemata einschließt.

23. Empfänger nach einem der Ansprüche 17 oder 18, wobei das Übertragungsschema variable Ratenanpassungsschemata einschließt.

24. Empfänger nach einem der Ansprüche 16 bis 23, wobei der Empfänger ein Rückkopplungs-Übertragungsschema von dem Empfänger zu dem Sender in Abhängigkeit von der bestimmten Kanalqualität bestimmt.

25. Empfänger nach einem der Ansprüche 16 bis 24, wobei eine Basisstation die erste Untermenge der Mehrwege-Ausbreitungen bestimmt und die Benutzerausrüstung über die bestimmte erste Untermenge von Mehrwege-Ausbreitungen informiert wird.

26. Empfänger nach einem der Ansprüche 16 bis 25, wobei der Sender analoge Strahlformung einsetzt.

27. Empfänger nach einem der Ansprüche 16 bis 25, wobei der Sender digitale Strahlformung einsetzt.

28. Empfänger nach einem der Ansprüche 16 bis 25, wobei der Sender feste Strahlen einsetzt.

29. Empfänger nach einem der Ansprüche 16 bis 27, wobei der Empfänger weiter Mittel zum Übertragen eines bestimmten Modulationsschemas umfasst.

30. Empfänger nach einem der Ansprüche 16 bis 29, wobei die erste Untermenge der Mehrwege-Ausbreitungen des empfangenen Antennensignals den zuerst empfangenen Mehrwege-Ausbreitungen entspricht.

31. Empfänger nach einem der Ansprüche 16 bis 30, wobei der Empfänger ein Mobilendgerät eines Mobilkommunikationssystems ist.

## Revendications

1. Procédé de détermination de la qualité de canal d'un signal émis dans un récepteur (112, 114) d'un système de communication, ledit système comportant un émetteur à antenne adaptative capable d'émettre au moins un signal de faisceau étroit (116, 120) et au moins un signal d'antenne large (118), ledit procédé comprenant les étapes consistant à : recevoir ledit signal de faisceau ; recevoir ledit signal d'antenne ; dans lequel les signaux de faisceau et d'antenne reçus comprennent chacun une pluralité de signaux de trajets multiples ; et estimer des paramètres du signal de faisceau reçu sur la base des informations reçues dans un premier sous-ensemble des trajets multiples du signal d'antenne reçu ; **caractérisé en ce que** le premier sous-ensemble des trajets multiples du signal d'antenne reçu correspondant aux trajets multiples dans le signal de faisceau reçu est choisi.

2. Procédé selon la revendication 1, dans lequel le récepteur détermine un schéma de transmission pour l'émetteur en fonction de la qualité de canal déterminée.

3. Procédé selon la revendication 1 ou la revendication 2, dans lequel le récepteur détermine un schéma de transmission pour une transmission d'accès par paquets en liaison descendante haut débit en fonction de la qualité de canal déterminée.

4. Procédé selon l'une quelconque des revendications 2 à 3, dans lequel le schéma de transmission comprend des schémas de modulation variable.

5. Procédé selon l'une quelconque des revendications 2 à 3, dans lequel le schéma de transmission comprend des schémas d'étalement variable.

6. Procédé selon l'une quelconque des revendications 2 à 3, dans lequel le schéma de transmission comprend des schémas de codage variable.

7. Procédé selon l'une quelconque des revendications 2 à 3, dans lequel le schéma de transmission comprend des schémas d'entrelacement variable.

8. Procédé selon l'une quelconque des revendications 2 à 3, dans lequel le schéma de transmission comprend des schémas d'équilibrage de débit variable.

9. Procédé selon l'une quelconque des revendications précédentes, dans lequel le récepteur détermine un schéma de transmission à rétroaction du récepteur à l'émetteur en fonction de la qualité de canal déterminée.

10. Procédé selon l'une quelconque des revendications précédentes, dans lequel une station de base détermine le premier sous-ensemble des trajets multiples et l'équipement de l'utilisateur est informé du premier sous-ensemble déterminé de trajets multiples.

11. Procédé selon l'une quelconque des revendications 1 à 10, dans lequel l'émetteur emploie une formation de faisceau analogique.

12. Procédé selon l'une quelconque des revendications 1 à 10, dans lequel l'émetteur emploie une formation de faisceau numérique.

13. Procédé selon l'une quelconque des revendications 1 à 10, dans lequel l'émetteur emploie des faisceaux fixes.

14. Procédé selon l'une quelconque des revendications précédentes, dans lequel le premier sous-ensemble des trajets multiples du signal d'antenne reçu correspond aux trajets multiples reçus en premier.

15. Procédé selon l'une quelconque des revendications précédentes, dans lequel le récepteur est un terminal mobile d'un système de communication mobile.

16. Récepteur (112, 114) d'un système de communication, ledit système comportant un émetteur à antenne adaptative capable d'émettre au moins un signal de faisceau étroit (116, 120) et au moins un signal d'antenne large (118), ledit récepteur comprenant : des moyens d'entrée destinés à recevoir un signal de faisceau (116, 120) et destinés à recevoir un signal d'antenne (118), dans lequel les signaux de faisceau et d'antenne reçus comprennent chacun une pluralité de signaux de trajets multiples ; des moyens d'estimation (303), connectés aux moyens d'entrée, destinés à estimer la qualité de canal du signal de faisceau reçu sur la base des informations reçues dans un premier sous-ensemble des trajets multiples des signaux d'antenne reçus ; dans lequel le premier sous-ensemble des trajets multiples du signal d'antenne reçu correspond aux trajets multiples dans le signal de faisceau reçu.

17. Récepteur selon la revendication 16, dans lequel le récepteur détermine un schéma de transmission pour l'émetteur en fonction de la qualité de canal déterminée.

18. Récepteur selon la revendication 16 ou la revendication 17, dans lequel le récepteur détermine un schéma de transmission pour une transmission d'accès par paquets en liaison descendante haut débit en fonction de la qualité de canal déterminée.

19. Récepteur selon l'une quelconque des revendications 17 à 18, dans lequel le schéma de transmission comprend des schémas de modulation variable.

20. Récepteur selon l'une quelconque des revendications 17 à 18, dans lequel le schéma de transmission comprend des schémas d'étalement variable.

21. Récepteur selon l'une quelconque des revendications 17 à 18, dans lequel le schéma de transmission comprend des schémas de codage variable.

22. Récepteur selon l'une quelconque des revendications 17 à 18, dans lequel le schéma de transmission comprend des schémas d'entrelacement variable.

23. Récepteur selon l'une quelconque des revendications 17 à 18, dans lequel le schéma de transmission comprend des schémas d'équilibrage de débit variable.

24. Récepteur selon l'une quelconque des revendications 16 à 23, dans lequel le récepteur détermine un schéma de transmission à rétroaction du récepteur à l'émetteur en fonction de la qualité de canal déterminée.

25. Récepteur selon l'une quelconque des revendications 16 à 24, dans lequel une station de base détermine le premier sous-ensemble des trajets multiples et l'équipement d'utilisateur est informé du premier sous-ensemble de trajets multiples.

26. Récepteur selon l'une quelconque des revendications 16 à 25, dans lequel l'émetteur emploie une formation de faisceau analogique.

27. Récepteur selon l'une quelconque des revendications 16 à 25, dans lequel l'émetteur emploie une formation de faisceau numérique.

28. Récepteur selon l'une quelconque des revendications 16 à 25, dans lequel l'émetteur emploie des faisceaux fixes.

29. Récepteur selon l'une quelconque des revendications 16 à 27, dans lequel le récepteur comprend en outre des moyens destinés à émettre un schéma de modulation déterminé.

30. Récepteur selon l'une quelconque des revendications 16 à 29, dans lequel le premier sous-ensemble des trajets multiples du signal d'antenne reçu correspond aux trajets multiples reçus en premier.

31. Récepteur selon l'une quelconque des revendications 16 à 30, dans lequel le récepteur est un terminal mobile d'un système de communication mobile.
